# EUROPEAN PATENT APPLICATION

(11) **EP 2 772 765 A1**
(43) Date of publication of application: **03.09.2014**
(21) Application number: 12844016.1
(22) Date of filing: 22.10.2012
(51) Int. Cl.: G01Q 70/16, G01Q 60/24

(54) **NANO ELECTRODE AND MANUFACTURING METHOD THEREOF**

(30) Priority: 24.10.2011 KR 20110108858
(71) Applicant: Postech Academy-Industry Foundation, Pohang-si, Gyeongsangbuk-do 790-784 (KR)
(72) Inventor: LIM, Geunbae, Pohang-si Gyeongsangbuk-do 791-792 (KR); AN, Taechang, Pohang-si Gyeongsangbuk-do 790-784 (KR); LEE, Eunjoo, Pohang-si Gyeongsangbuk-do 790-784 (KR)
(74) Representative: Winter, Brandl, Fürniss, Hübner, Röss, Kaiser, Polte - Partnerschaft mbB
(86) International application number: PCT/KR2012/008663
(87) International publication number: WO 2013/062275

(57) **Abstract**

A nano electrode according to the present invention includes: a main body having a protruding probe, a nano wire attached to the probe, and an insulation film surrounding the nano wire and including an opening through which an upper surface of the nano wire is exposed.

## Description

### [Technical Field]

The present invention relates to a nano electrode, and particularly, to a probe-type nano electrode and a method of manufacturing the same.

### [Background Art]

Parts and devices having a fine size have been developed together with development of nano image analysis equipment, and examples of the nano image analysis equipment include an atomic force microscope (ATM), a scanning tunneling microscope, and the like.

Among the examples, in the atomic force microscope, a pyramid-shaped sharp probe is formed at an end of a small rod that is called a cantilever, and an image resolution and reproducibility of the atomic force microscope are determined according to a shape and a size of the probe.

An end of the probe may be sharpened by using a method such as etching, but it is not easy to control the size and the shape of the probe by using etching, and additionally, a material to which this method may be applied is limitative.

Recently, a technology of using the probe by attaching a nano tube to the end of the probe in order to sharpen the end of the probe has been developed.

Like this, with a reduction in size of the probe to a nano size, the probe may be used in a functional atomic force microscope, the scanning tunneling microscope, or the like by analyzing an electrochemical reaction in a fine region.

In order to examine an electric reaction and a chemical reaction in the fine region, particularly a region including liquid, precise measurement is feasible only when a size of an electrode is minimized.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

However, it is not easy to reduce a size of an electrode, and it is more difficult to form the electrode in a nano size.

Accordingly, the present invention has been made in an effort to provide a nano electrode in which an electrode is manufactured at a level of several hundred nanometers to precisely measure an electrochemical reaction of a fine region, and a method of manufacturing the same.

### [Technical Solution]

An exemplary embodiment of the present invention provides a nano electrode including: a main body having a protruding probe,
a nano wire attached to the probe, and an insulation film surrounding the nano wire and including an opening through which an upper surface of the nano wire is exposed.

The nano electrode may further include an electrode positioned on the upper surface of the nano wire, and the electrode may be formed of any one of gold, platinum, aluminum, or nickel.

The insulation film may include at least one of parylene, an oxynitride film, and an electrophoretic paint.

Another exemplary embodiment of the present invention provides a method of manufacturing a nano electrode, including: preparing a main body including a probe, attaching a nano wire to an end of the probe, forming an insulation film on the nano wire, and cutting the nano wire and the insulation film to expose a cross section of the nano wire and thus form a cross-sectional electrode.

The method may further include forming an electrode on the cross section of the nano wire, and the electrode may be formed by plating.

The plating may be formed by any one of gold, platinum, aluminum, or nickel.

The insulation film may be formed by parylene, an oxynitride film, or an electrophoretic paint.

The nano wire may be formed of a carbon nano tube or a conductive polymer.

The conductive polymer may include polypyrrole or polyaniline.

The cutting may be performed by a focused ion beam.

The attaching of the nano wire may be performed by a dielectrophoresis method.

### [Advantageous Effects]

If a nano electrode is formed according to the present invention, since only an upper portion of a probe can be selectively used as an electrode, it is possible to precisely measure an electrochemical reaction of a fine region.

### [Description of the Drawings]

FIG. 1 is a cross-sectional view of a nano electrode according to an exemplary embodiment of the present invention.
FIG. 2 is a flowchart for describing a manufacturing method for forming the nano electrode of FIG. 1.
FIGS. 3 to 7 are SEM pictures in each process of forming the nano electrode of FIG. 1 according to the order of FIG. 2.
FIG. 8 is a graph obtained by measuring CV (cyclic voltammetry) of the nano electrode formed according to the exemplary embodiment of the present invention.

### <Description of Reference Numerals>

| | |
|---|---|
| 100: Main body | 200: Probe |
| 300: Nano wire | 400: Insulation film |
| 500: Electrode | |

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Hereinafter, a nano electrode of the present invention and a method of manufacturing the same will be described below in detail with reference to the accompanying drawings.

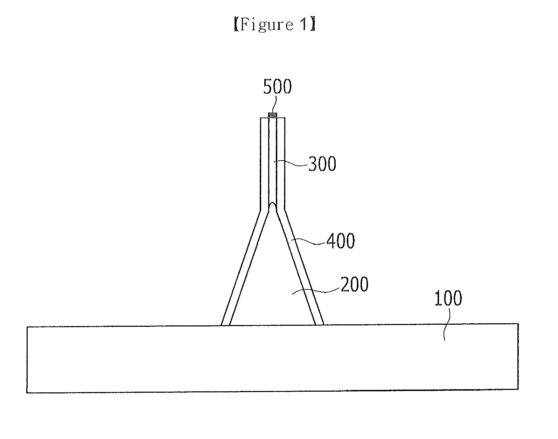

FIG. 1 is a cross-sectional view schematically illustrating a shape of a nano probe according to an exemplary embodiment of the present invention.

As illustrated in FIG. 1, the nano electrode according to the present invention includes a main body 100, a probe 200 protruding from the main body 100, a nano wire 300 attached to an end of the probe 200, an insulation film 400 surrounding the nano wire 300, and a nano electrode 500 formed on an upper surface of the nano wire 300.

The main body 100 is a portion to which the probe is attached, and may be a cantilever of an atomic force microscope.

The probe 200 protrudes in a vertical direction to the main body 100, and may be a tungsten tip or a tip of the atomic force microscope having a pyramid shape where a width is decreased toward an end.

The nano wire 300 may be formed of a carbon nano tube or a conductive polymer, and examples of the conductive polymer include polypyrrole and polyaniline.

The nano wire has a rod shape, and an end of the nano wire is attached to the end of the probe to increase a length of the protruding probe and thus further sharpen the end of the probe. The nano wire 300 has a diameter of several tens nm to several hundreds nm.

The insulation film 400 surrounds a side wall of the nano wire 300, and includes a cut portion through which the upper surface of the nano wire 300 is exposed.

The insulation film 400 may be formed of an insulation material such as parylene, an electrophoretic paint, a silicon nitride film, and a silicon oxide film. The insulation film may be formed of a monolayer, but may be formed of a plurality of layers in order to solve pinholes, defects, and the like included in the insulation film. For example, after a parylene layer is formed, an electrophoretic paint layer may be further formed.

The electrode 500 is positioned on an upper surface of the probe 200, and may be formed of a metal on which plating can be performed with gold, platinum, aluminum, nickel, and the like. This metal may be selected in consideration of a characteristic of a portion to be measured, for example, a contact characteristic with the electrode, an area of the portion to be measured, stability and costs of the electrode, and the like, to form the electrode.

The electrode 500 may be formed in a size of 200 nm or less, which is changed according to a diameter of a cross section of the nano wire 300.

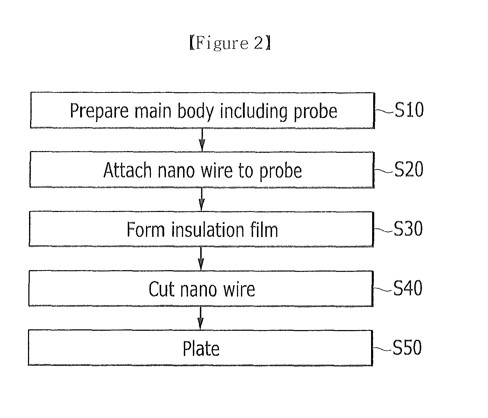

A method of forming the aforementioned nano electrode will be specifically described with reference to FIGS. 2 to 6.

FIG. 2 is a flowchart for describing a manufacturing method for forming the nano electrode of FIG. 1, and FIGS. 3 to 7 are SEM pictures in each process of forming the nano electrode of FIG. 1 according to the order of FIG. 2.

First, the main body 100 including the probe 200 is prepared (S10). The probe may be formed by electrochemically etching a tungsten wire or depositing the silicon nitride film on the main body 100 and etching the silicon nitride film so as to have a sharp end shape, and then depositing the metal.

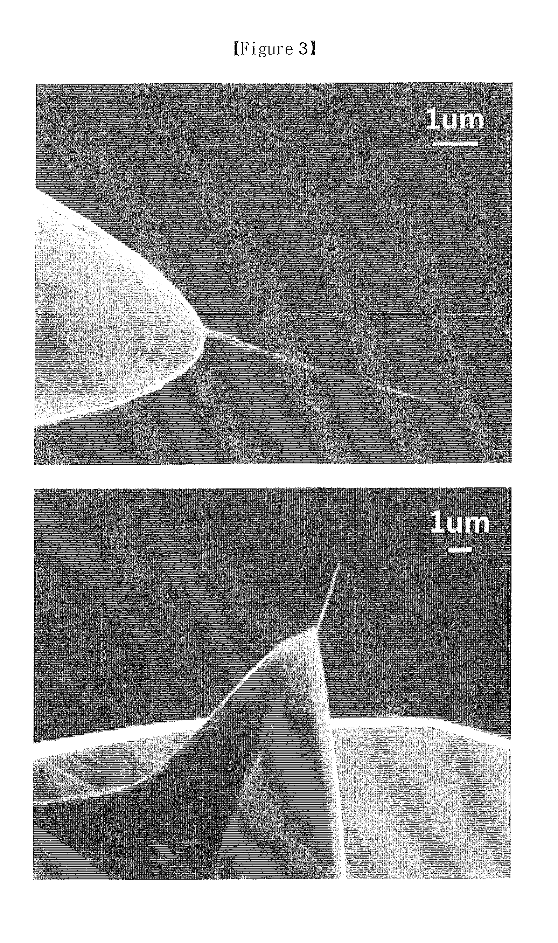

Next, as illustrated in FIG. 3, the nano wire 300 is attached to the end of the probe 200 (S20). In this case, an upper end image of FIG. 3 is obtained by attaching the nano wire to a probe for SPM, and a lower end image of FIG. 3 is a picture obtained by attaching the nano wire to a probe for AFM.

The nano wire 300 may be attached to the probe by a method such as dielectrophoresis where a strong electric field is applied to a solution including the carbon nano tube or the conductive polymer (for example, polypyrrole and polyaniline).

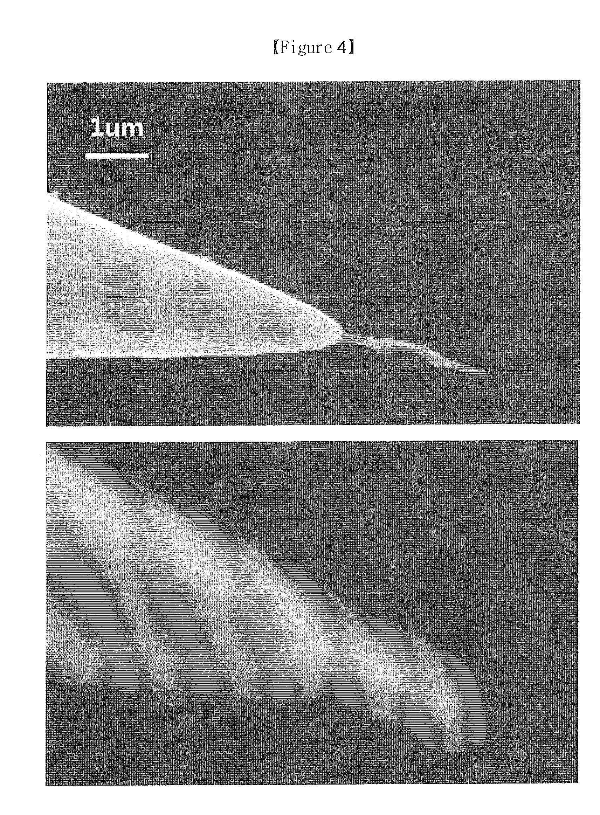

Subsequently, the insulation material is deposited to cover the nano wire 300 and thus, as illustrated in FIG. 4, to form the insulation film 400 (S30). The insulation film may be formed by a chemical vapor deposition method, or by dipping the nano wire in a liquid type insulation material to coat an external wall of the nano wire with the insulation material.

Since the size of the nano electrode is changed according to a thickness of the insulation film 400, the size of the nano electrode may be reduced by minimizing the thickness of the insulation film. When the thickness of the insulation film 400 is reduced, the size of the nano electrode is reduced but an insulation characteristic of the nano electrode is reduced, and thus it is preferable that the insulation film 400 be formed in a thickness of 500 nm or more in order to maintain the insulation characteristic.

Next, the cross section of the nano wire 300 is exposed by cutting the insulation film 400 (S40).

Cutting may be performed by using a focused ion beam (FIB) using a focused high energy beam such as a laser, or using resistance heat generated if a current is applied in a state where the probe is connected to both sides of the nano wire, or the nano wire may be cut by positioning the nano wire on a hot wire to remove the insulation film by heat of the hot wire.

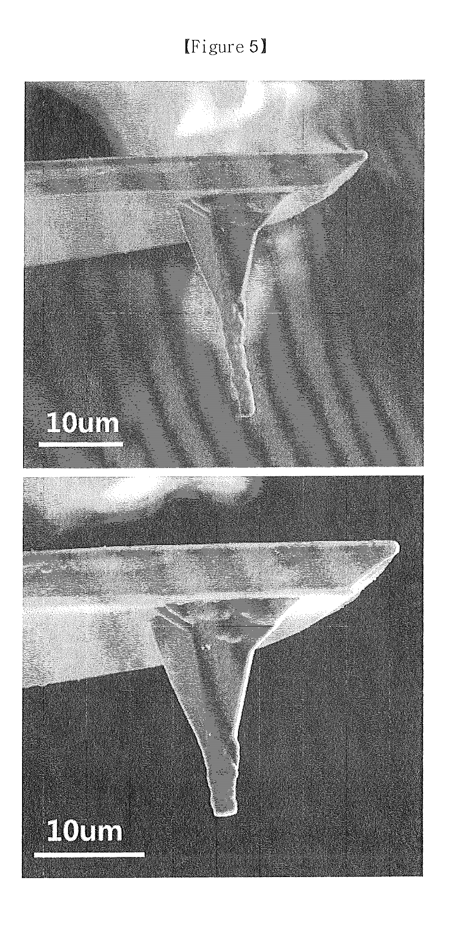

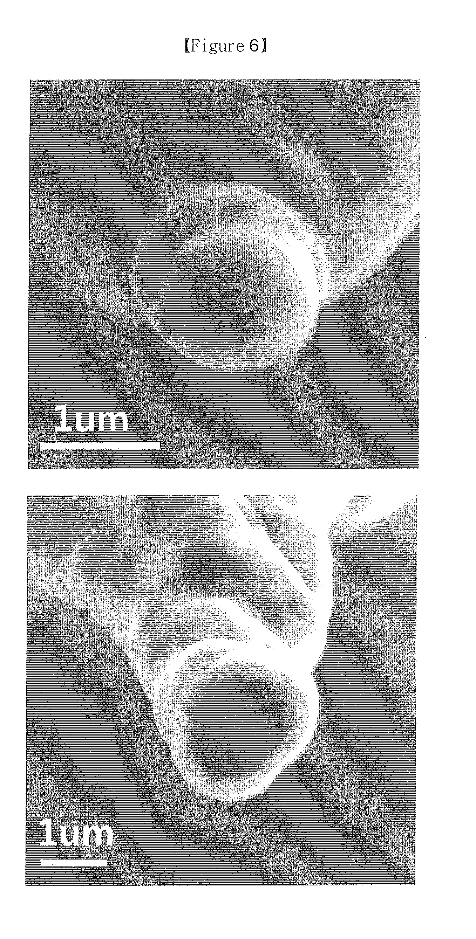

FIGS. 5 and 6 are pictures in the case where cutting is performed by using the focused ion beam in which the current value is 50 pA, and cutting is performed for 1 minute. Referring to FIGS. 5 and 6, it can be confirmed that the cross section of the nano wire is exposed at a cut portion.

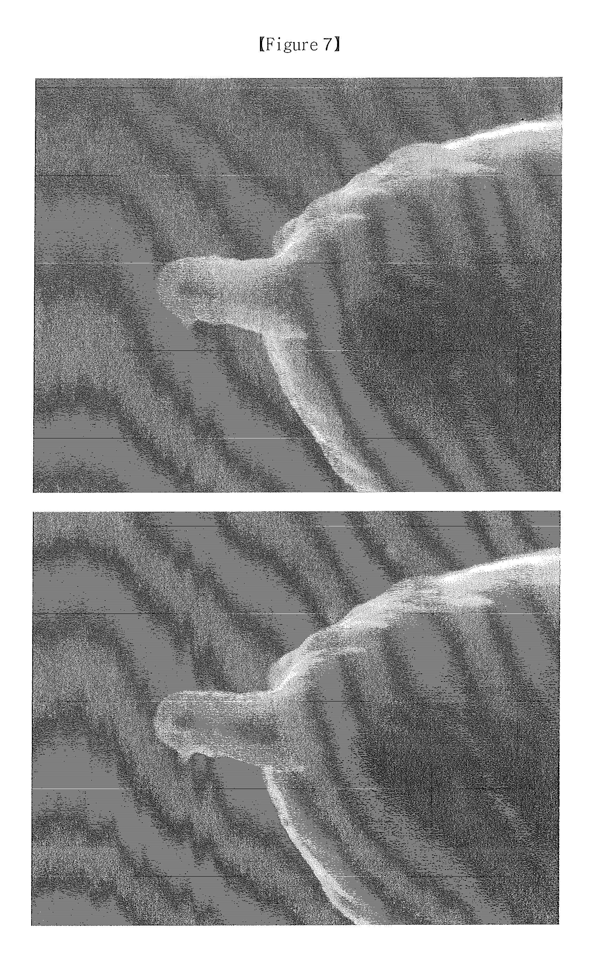

Subsequently, as illustrated in FIG. 7, the nano electrode is completed by forming the electrode 500 on the cross section of the nano wire 300 by plating (S50). Since plating is performed on only the cross section of the nano wire, the electrode is formed to protrude as compared to the insulation film.

Plating may be performed by gold, platinum, aluminum, nickel, or the like. In the exemplary embodiment of the present invention, plating is performed in 10 mM K₂PtCl₄ solution for 2 minutes.

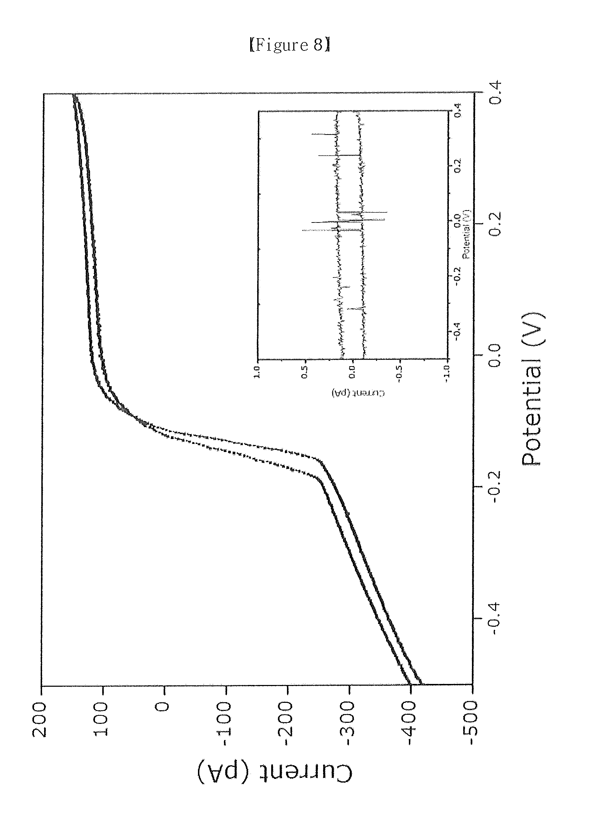

Like the exemplary embodiment of the present invention, it can be seen that the nano electrode can be used as the electrode through FIG. 8.

FIG. 8 is a graph obtained by measuring CV (cyclic voltammetry) of the nano electrode formed according to the exemplary embodiment of the present invention. In this case, a mixture solution of 10 mM ferricyanide compound and 0.5 M KCl is used as the aforementioned solution, and an oxidation reduction reaction of the mixture solution occurs at -0.4 V to -0.3 V.

As illustrated in FIG. 8, it can be seen that if CV is measured by using the mixture solution, the oxidation reduction reaction of the mixture solution occurs.

Accordingly, the nano electrode according to the present invention may be used as an electrochemical electrode measuring an electrochemical reaction.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A nano electrode comprising:
a main body having a protruding probe,
a nano wire attached to the probe, and
an insulation film surrounding the nano wire and including an opening through which an upper surface of the nano wire is exposed.

2. The nano electrode of claim 1, further comprising:
an electrode positioned on the upper surface of the nano wire.

3. The nano electrode of claim 1, wherein:
the electrode is formed of any one of gold, platinum, aluminum, tungsten, copper, or nickel.

4. The nano electrode of claim 1, wherein:
the insulation film includes at least one of parylene, an oxynitride film, and an electrophoretic paint.

5. A method of manufacturing a nano electrode, comprising:
preparing a main body including a probe,
attaching a nano wire to an end of the probe,
forming an insulation film on the nano wire, and
cutting the nano wire and the insulation film to expose a cross section of the nano wire and thus form a cross-sectional electrode.

6. The method of claim 5, further comprising:
forming an electrode on the cross section of the nano wire.

7. The method of claim 6, wherein:
the electrode is formed by plating.

8. The method of claim 7, wherein:
the plating is formed by any one of gold, platinum, aluminum, or nickel.

9. The method of claim 5, wherein:
the insulation film is formed by parylene, an oxynitride film, or an electrophoretic paint.

10. The method of claim 5, wherein:
the nano wire is formed of a carbon nano tube or a conductive polymer.

11. The method of claim 10, wherein:
the conductive polymer includes polypyrrole or polyaniline.

12. The method of claim 5, wherein:
the cutting is performed by a focused ion beam.

13. The method of claim 5, wherein:
the attaching of the nano wire is performed by a dielectrophoresis method.
